# EUROPÄISCHE PATENTSCHRIFT

(11) **EP 3 507 170 B1**
(45) Veröffentlichungstag und Bekanntmachung des Hinweises auf die Patenterteilung: **11.11.2020**
(21) Anmeldenummer: 17755117.3
(22) Anmeldetag: 09.08.2017
(51) Int. Cl.: B62D 15/02, B60T 8/1755, B60K 28/06, B60W 50/16, B60W 50/14, B60T 7/14, B60W 30/12, B60T 7/22, B60W 10/18, B60W 10/20, B60W 30/095

(54) **VERFAHREN ZUR STEUERUNG ODER REGELUNG EINES FAHRERASSISTENZSYSTEMS EINES FAHRZEUGS UND FAHRERASSISTENZSYSTEM**
METHOD FOR THE CONTROL OF A DRIVER ASSISTANCE SYSTEM OF A VEHICLE, AND DRIVER ASSISTANCE SYSTEM
PROCÉDÉ DE COMMANDE OU DE RÉGULATION D'UN SYSTÈME D'AIDE À LA CONDUITE D'UN VÉHICULE ET SYSTÈME D'AIDE À LA CONDUITE

(30) Priorität: 05.09.2016 DE 102016116515
(43) Veröffentlichungstag der Anmeldung: 10.07.2019
(73) Patentinhaber: KNORR-BREMSE Systeme für Nutzfahrzeuge GmbH, 80809 München (DE)
(72) Erfinder: GÜCKER, Ulrich, 71701 Schwieberdingen (DE); KLEIN, Markus, 75181 Pforzheim (DE); MEYER, Jan, 71691 Freiberg am Neckar (DE)
(86) Internationale Anmeldenummer: PCT/EP2017/070257
(87) Internationale Veröffentlichungsnummer: WO 2018/041575

(56) Entgegenhaltungen:
- EP-A2- 2 487 085
- WO-A1-2005/118372
- DE-A1-102004 024 692
- DE-A1-102004 047 861
- DE-A1-102006 058 412
- DE-A1-102008 005 999
- DE-A1-102011 109 618
- US-A1- 2009 021 358
- US-A1- 2011 044 507
- TAKAHASHI ISSEY ET AL: "Automated safety vehicle stop system for cardiac emergencies", 2016 IEEE INTERNATIONAL CONFERENCE ON EMERGING TECHNOLOGIES AND INNOVATIVE BUSINESS PRACTICES FOR THE TRANSFORMATION OF SOCIETIES (EMERGITECH), IEEE, 3. August 2016 (2016-08-03), Seiten 9-12, XP032998721, DOI: 10.1109/EMERGITECH.2016.7737302 [gefunden am 2016-11-07]
- SAITO YUICHI ET AL: "Dual control theoretic driver assistance - Dynamic characteristics of steering torque control based on linear quadratic regulator", 2014 IEEE INTERNATIONAL CONFERENCE ON SYSTEMS, MAN, AND CYBERNETICS (SMC), IEEE, 5. Oktober 2014 (2014-10-05), Seiten 1738-1743, XP032693509, DOI: 10.1109/SMC.2014.6974168 [gefunden am 2014-12-03]

## Beschreibung

Die Erfindung geht aus von einem Verfahren zur Steuerung oder Regelung eines Fahrerassistenzsystems eines Fahrzeugs gemäß dem Oberbegriff von Anspruch 1 sowie von einem Fahrerassistenzsystem gemäß dem Oberbegriff von Anspruch 7.

Als Fahrerassistenzsysteme sind Spurhalteassistenz-Systeme mit selbsttätigem Eingriff in die Fahrzeugdynamik bzw. selbsttätiger Spurkorrektur bekannt, welche auch als eingreifende Spurhalteassistenz-Systeme, LDP (lane departure prevention), LKS (lane keeping system) oder LKAS (lane keeping assistant system) bezeichnet werden. Die Spurhalteassistenz-Systeme detektieren das Fahrzeugumfeld mittels einer Umfeldsensorik und greifen in die Fahrzeugdynamik ein, um ein Verlassen der Fahrspur des Fahrzeugs zu verhindern. Hierbei können unterschiedliche Aktoren des Fahrzeugs angesteuert werden, insbesondere die Fahrzeuglenkung und/oder Bremsen. Selbsttätige Eingriffe in die Fahrzeug-Lenkung sind insbesondere bei einer elektromechanischen Lenkung (EPS, electric power steering), einer Aktivlenkung (AFS, active front steering) oder RWS (rear wheel steering), möglich. Bremseingriffe können insbesondere durch einseitige Bremseingriffe oder asymmetrische Bremseingriffe erfolgen. Durch die Eingriffe in die Fahrzeug-Aktuatorik wird ein Giermoment um die Fahrzeughochachse aufgeprägt, welches das Fahrzeug zu einer Gierbewegung veranlasst, um ein Verlassen der Fahrspur zu verhindern.

Der Grad der Automatisierung reicht dabei von Systemen, die den Fahrer durch Aufbringen künstlicher Lenk-/Bremskräfte darauf hinweisen, wie er die Lenkung betätigen müsste, um das Fahrzeug in seiner Fahrspur zu halten (halbautomatische Systeme), bis hin zu LKS-Systemen, die das Fahrzeug vollautomatisch in seiner Fahrspur führen.

In DE 101 14 470 A1 wird ein Fahrerassistenzsystem beschrieben, bei dem der Abstand der rechten Fahrzeugbegrenzung vom rechten Fahrbahnrad und der Abstand der linken Fahrzeugbegrenzung vom linken Fahrbahnrand sowie die zeitlichen Änderungen dieser Größen bestimmt werden. Anhand dieser Informationen wird nach einem Algorithmus entschieden, ob ein Eingriff in die Lenkung erforderlich ist. In einem Warnbetrieb wird in diesem Fall ein optisches, akustisches und/oder haptisches (z. B. rüttelndes Lenkrad) Warnsignal ausgegeben, das den Fahrer auffordert, manuell in die Lenkung einzugreifen.

Wenn dagegen ein Regelmodus aktiviert ist, wird stattdessen ein entsprechender Korrekturbefehl an ein Lenkungsstellglied ausgegeben, durch welches dann das Fahrzeug in die Mitte der Fahrspur gezogen wird.

Falls der Fahrer jedoch plötzlich gesundheitlich beeinträchtigt oder während der Fahrt eingeschlafen ist, ist es nicht auszuschließen, dass er das Warnsignal nicht wahrnimmt. Das Fahrzeug würde dann durch das LKS-System automatisch in die Mitte der Fahrspur gezogen und unter Umständen dort stehen bleiben, was schwere Auffahrunfälle zur Folge haben kann.

Die gattungsgemäße WO 2005/118372 A1 schlägt eine graduelle Einflussnahme auf einen unaufmerksamen Fahrer in drei Stufen vor - Informieren, Warnen, Eingreifen -. Wenn das Informieren und Warnen zu keiner Reaktion des Fahrers führt, wird aktiv in die Steuerung des Fahrzeugs eingegriffen. Dies beinhaltet eine aktive rückführende Lenkbewegung oder eine Bremsung, dass das Fahrzeug zurück in die Fahrspur geführt wird.

Der vorliegenden Erfindung liegt demgegenüber die Aufgabe zugrunde, ein Verfahren zur Steuerung oder Regelung eines Fahrerassistenzsystems bzw. ein Fahrerassistenzsystem der eingangs erwähnten Art derart weiter zu entwickeln, dass es eine höhere Sicherheit gegen Unfälle aufweist.

Diese Aufgabe wird erfindungsgemäß durch die Merkmale von Anspruch 1 und Anspruch 7 gelöst.

### Offenbarung der Erfindung

Die Erfindung geht aus von einem Verfahren zur Steuerung oder Regelung eines Fahrerassistenzsystems eines Fahrzeugs, bei welchem
a) mit Hilfe einer ersten Sensoreinrichtung von einer Fahrbahn wenigstens eine Fahrspur und eine Fahrbahnmarkierung detektiert wird, welche die Fahrspur von einem Fahrbahnrand trennt, und
b) mit Hilfe einer zweiten Sensoreinrichtung eine Betätigung wenigstens einer, die Fahrdynamik des Fahrzeugs durch den Fahrer beeinflussenden Betätigungseinrichtung des Fahrzeugs detektiert wird,
c) mit Hilfe von Lenkaktuatoren und/oder Bremsaktuatoren die Fahrdynamik des Fahrzeugs beeinflusst wird, und bei welchem
d) bei einem durch die erste Sensoreinrichtung detektiertem drohenden Verlassen der Fahrspur durch das Fahrzeug ein erstes Warnsignal ausgegeben wird.

Erfindungsgemäß ist bei dem Verfahren vorgesehen, dass
e) falls innerhalb eines ersten fest vorgegebenen oder variablen Zeitraums, welcher unmittelbar nach der Ausgabe des ersten Warnsignals beginnt, durch die zweite Sensoreinrichtung eine Betätigung der wenigstens einen, die Fahrdynamik des Fahrzeugs durch den Fahrer beeinflussenden Betätigungseinrichtung detektiert wird, kein automatischer Eingriff in die Fahrdynamik des Fahrzeugs durch die Lenkaktuatoren und/oder Bremsaktuatoren erfolgt,
f) falls aber innerhalb des ersten vorgegebenen oder variablen Zeitraums, welcher unmittelbar nach der Ausgabe des ersten Warnsignals beginnt, durch die zweite Sensoreinrichtung keine Betätigung der wenigstens einen, die Fahrdynamik des Fahrzeugs durch den Fahrer beeinflussenden Betätigungseinrichtung, aber durch die erste Sensoreinrichtung ein bereits erfolgtes Überfahren der Fahrbahnmarkierung durch wenigstens ein Rad des Fahrzeug detektiert wird, dann wird
g) ein zweites Warnsignal ausgegeben und als automatischer Eingriff in die Fahrdynamik des Fahrzeugs mit Hilfe der Lenkaktuatoren und/oder der Bremsaktuatoren das Fahrzeug automatisch im überfahrenen Zustand der Fahrbahnmarkierung gehalten und entlang der überfahrenen Fahrbahnmarkierung derart weitergeführt, dass eine Längsmittelachse des Fahrzeugs um weniger als ein vorgegebener maximaler seitlicher Versatz von der Fahrbahnmarkierung versetzt ist, derart, dass die Fahrbahnmarkierung zwischen den Rädern der Achsen des Fahrzeugs angeordnet ist, und
h) falls innerhalb eines zweiten fest vorgegebenen oder variablen Zeitraums, welcher unmittelbar nach der Ausgabe des zweiten Warnsignals beginnt, durch die zweite Sensoreinrichtung eine Betätigung der wenigstens einen die Fahrdynamik des Fahrzeugs durch den Fahrer beeinflussenden Betätigungseinrichtung detektiert wird, dann wird der automatische Eingriff in die Fahrdynamik des Fahrzeugs beendet, falls aber
i) innerhalb des zweiten fest vorgegebenen oder variablen Zeitraums, welcher unmittelbar nach der Ausgabe des zweiten Warnsignals beginnt, durch die zweite Sensoreinrichtung keine Betätigung der wenigstens einen die Fahrdynamik des

Fahrzeugs durch den Fahrer beeinflussenden Betätigungseinrichtung detektiert wird, dann wird
i1) das Fahrzeug mit Hilfe der Lenkaktuatoren und/oder der Bremsaktuatoren weiterhin automatisch im überfahrenen Zustand der Fahrbahnmarkierung gehalten und entlang der überfahrenen Fahrbahnmarkierung derart weitergeführt, dass die Längsmittelachse des Fahrzeugs um weniger als ein vorgegebener maximaler seitlicher Versatz von der Fahrbahnmarkierung versetzt ist, derart, dass die Fahrbahnmarkierung zwischen den Rädern der Achsen des Fahrzeugs angeordnet ist, und
i2) unmittelbar nach Ablauf des zweiten vorgegebenen oder variablen Zeitraums oder mit zeitlicher Verzögerung nach diesem Ablauf das Fahrzeug automatisch bis in den Stillstand abgebremst.

Der Ausdruck "falls durch die zweite Sensoreinrichtung eine Betätigung der wenigstens einen, die Fahrdynamik des Fahrzeugs durch den Fahrer beeinflussenden Betätigungseinrichtung detektiert wird" in Merkmal e) bedeutet, dass der Fahrer in die Fahrdynamik des Fahrzeugs eingreift bzw. eingegriffen hat, indem er beispielsweise das Gaspedals, das Bremspedals oder das Lenkrads des Fahrzeugs betätigt hat. Dadurch signalisiert der Fahrer er durch Eingreifen in die Fahrdynamik des Fahrzeugs die Verantwortung übernommen hat, so dass auch kein automatischer Eingriff in die Fahrdynamik des Fahrzeugs durch die Lenkaktuatoren und/oder Bremsaktuatoren erfolgen muss.

Eine solche Betätigung durch den Fahrer kann beispielsweise durch die elektrischen Signale von elektrischen Messaufnehmern detektiert werden, welche bei heutzutage üblichen elektrischen Gaspedalen, elektrischen Bremspedalen und bei Lenkungen in Form von Lenkwinkelsensoren ohnehin vorhanden sind.

Der Ausdruck "falls durch die erste Sensoreinrichtung ein bereits erfolgtes Überfahren der Fahrbahnmarkierung durch wenigstens ein Rad des Fahrzeug detektiert wird" in Merkmal f) bedeutet, dass das wenigstens eine Rad des Fahrzeugs bereits vollständig über die Fahrbahnmarkierung hinweg gefahren ist, so dass sich ein Teil des Fahrzeugs bereits jenseits der Fahrbahnmarkierung und damit auch außerhalb der Fahrspur und auf dem Fahrbahnrand befindet.

Vorzugsweise muss mittels der ersten Sensoreinrichtung ein erfolgtes Überfahren der Fahrbahnmarkierung durch wenigstens zwei Räder an unterschiedlichen Achsen und an einer Fahrzeugseite detektiert werden, bevor Schritt g) von Anspruch 1 ausgeführt wird.

Dann wird gemäß Merkmal g) ein zweites Warnsignal ausgegeben und als automatischer Eingriff in die Fahrdynamik des Fahrzeugs mit Hilfe der Lenkaktuatoren und/oder der Bremsaktuatoren das Fahrzeug automatisch im teilweise überfahrenen Zustand der Fahrbahnmarkierung gehalten und dabei parallel zur Fahrbahnmarkierung entlang dieser überfahrenen Fahrbahnmarkierung weitergeführt, wobei die Längsmittelachse des Fahrzeugs um weniger als ein vorgegebener maximaler seitlicher Versatz von der Fahrbahnmarkierung versetzt ist, derart, dass die Fahrbahnmarkierung zwischen den Rädern der Achsen des Fahrzeugs angeordnet ist. Der vorgegebene maximale seitliche Versatz der Längsmittelachse von der Fahrbahnmarkierung ist dabei beidseitig möglich, d.h. rechts und links in Bezug auf die Fahrbahnmarkierung und ist bevorzugt kleiner als die halbe Spurweite des Fahrzeugs, um zu gewährleisten, dass wenigstens ein Rad stets noch jenseits der Fahrbahnmarkierung läuft. Die Fahrbahnmarkierung als rechte oder linke Grenzmarkierung der Fahrbahn stellt dann eine Soll-Trajektorie für das Fahrzeug dar. Diese Soll-Trajektorie kann mit Hilfe einer Steuerung oder Regelung, insbesondere einer Lenkungsregelung (LKS) innerhalb des Fahrerassistenzsystems erzielt werden.

Im Falle einer Lenkungsregelung (LKS) ist ein elektronischer Lenkungsregler vorhanden sowie ein Lenkungsstellglied, welches aktiv auf eine Lenkung des Fahrzeugs einwirkt. Der seitliche Versatz der Längsmittelachse des Fahrzeugs in Bezug auf die Fahrbahnmarkierung, der in beiden Richtungen möglich ist, stellt dann die Regelgröße dar und wird als Sollgröße vorgegeben.

Daher wird der automatische Eingriff in die Fahrdynamik des Fahrzeugs mit Hilfe der Lenkaktuatoren und/oder der Bremsaktuatoren derart ausgeführt, dass dabei die Fahrbahnmarkierung zwischen den Rädern der Achsen des Fahrzeugs angeordnet ist. Dann bewegt sich das Fahrzeug vorzugsweise mit einem ersten zur Fahrspur weisenden Teil bzw. mit den zur Fahrspur weisenden Rädern seiner Achsen noch auf der Fahrspur, während der verbleibende, durch die Fahrbahnmarkierung vom ersten Teil getrennte zweite und von der Fahrspur weg weisende Teil des Fahrzeugs bzw. die von der Fahrspur weg weisenden Räder der Achsen sich auf dem Fahrbahnrand, dem sog. Bankett der Straße bewegt, welches den im Straßenquerschnitt der neben der Fahrbahn oder Fahrspur befindlichen Teil der Straßenkrone darstellt, welcher seitlich oft durch eine Böschung begrenzt ist.

Zusammenfassend stellt das Verfahren eine Abfolge von im Wesentlichen drei grundlegenden Verfahrensschritten dar, wobei mit steigender Anzahl von Verfahrensschritten die Maßnahmen, z.B. automatische Eingriffe in die Fahrdynamik des Fahrzeugs immer intensiver werden, wenn der Fahrer nicht selbst eingreift, nämlich:
1. Bei einem drohenden Verlassen der Fahrspur wird ein erstes Warnsignal ausgegeben.
2. Falls der Fahrer auf das erste Warnsignal nicht reagiert, dann wird abgewartet, bis die Fahrbahnmarkierung durch wenigstens ein Rad des Fahrzeugs überfahren wird. Dann wird ein zweites Warnsignal ausgegeben und das Fahrzeug durch automatische Lenkeingriffe auf einer Solltrajektorie entlang der bereits überfahrenen Fahrbahnmarkierung gehalten.
3. Falls der Fahrer auf das zweite Warnsignal nicht reagiert, dann wird das Fahrzeug automatisch weiterhin auf der Solltrajektorie entlang der bereits überfahrenen Fahrbahnmarkierung gehalten und automatisch bis in den Stillstand abgebremst.

Folglich wird ein Zurückziehen des Fahrzeugs in die Mitte der Fahrspur wie beim Stand der Technik vermieden. Falls der Fahrer daher gesundheitlich beeinträchtigt oder während der Fahrt eingeschlafen und folglich nicht mehr Herr der Situation ist, so können Auffahrunfälle mit Fahrzeugen, welche auf der Fahrspur nachfolgen vermieden werden, weil auf der Fahrspur noch genügend Platz zum Ausweichen bzw. zum Linksüberholen vorhanden ist.

Bevorzugt wird der automatische Eingriff in die Fahrdynamik des Fahrzeugs durch eine Hilfslenkeinrichtung und/oder ein Steer-by-Brake-System bewerkstelligt. Beispielsweise ist eine elektromechanische oder elektrische Lenkung vorhanden, welche durch das Hilfslenksystem ergänzt wird, durch welches dann ein automatischer Lenkeingriff als automatischer Eingriff in die Fahrdynamik erfolgt. Alternativ hierzu oder zusätzlich kann der automatische Eingriff in die Fahrdynamik des Fahrzeugs, welcher dieses dann entlang der Fahrbahnmarkierung führt durch einen selbsttätigen Bremseingriff, insbesondere durch einen einseitigen oder asymmetrischen Bremseingriff ausgeführt werden.

Hierzu kann eine elektronische Steuereinrichtung des Fahrerassistenzsystems direkt oder indirekt Radbremsen und/oder die Hilfslenkeinrichtung des Fahrzeugs ansteuern.

Gemäß einer Weiterbildung des Verfahrens wird das Fahrzeug in dem in den Stillstand eingebremsten Zustand in einen sicheren Modus gebracht wird, in welchem wenigstens eine der folgenden Aktionen durchgeführt wird: Eine Parkbremse wird zugespannt, der zuletzt in einer Betriebsbremse wirksame Bremsdruck wird aufrechterhalten, eine Warnblinkanlage wird eingeschaltet. Darüber hinaus können noch weitere Sicherheitsmaßnahmen ergriffen werden wie beispielsweise eine Straffung von Rückhalteeinrichtungen wie Sicherheitsgurten. Hierdurch können die Fahrzeuginsassen besser geschützt werden.

Die Erfindung geht auch aus von Fahrerassistenzsystem eines Fahrzeugs, mit
a) einer ersten Sensoreinrichtung, mit welcher von einer Fahrbahn wenigstens eine Fahrspur und eine Fahrbahnmarkierung detektiert wird, welche die Fahrspur von einem Fahrbahnrand trennt, und
b) mit einer zweiten Sensoreinrichtung, mit welcher eine Betätigung wenigstens einer die Fahrdynamik des Fahrzeugs durch den Fahrer beeinflussenden Betätigungseinrichtung des Fahrzeugs detektiert wird, und
c) mit einer Sensorsignale von der ersten Sensoreinrichtung und von der zweiten Sensoreinrichtung empfangenden elektronischen Steuereinrichtung, sowie mit
d) einer von der elektronischen Steuereinrichtung gesteuerten, Warnsignale ausgebenden Warneinrichtung, und
e) mit durch die elektronische Steuereinrichtung steuerbaren Lenkaktuatoren und/oder Bremsaktuatoren, durch welche die Fahrdynamik des Fahrzeugs beeinflussbar ist, wobei
f) die elektronische Steuereinrichtung ausgebildet ist, dass sie bei einem durch die erste Sensoreinrichtung detektiertem drohenden Verlassen der Fahrspur durch das Fahrzeug die Warneinrichtung zur Ausgabe eines ersten Warnsignals ansteuert.

Erfindungsgemäß ist das dadurch gekennzeichnet, dass
g) die Steuereinrichtung mit einer Zeitmesseinrichtung zusammenwirkt und weiterhin ausgebildet ist, dass
h) falls innerhalb eines ersten fest vorgegebenen oder variablen Zeitraums, welcher unmittelbar nach der Ausgabe des ersten Warnsignals beginnt durch die zweite Sensoreinrichtung eine Betätigung der wenigstens einen die Fahrdynamik des Fahrzeugs durch den Fahrer beeinflussenden Betätigungseinrichtung detektiert wird, die Steuereinrichtung keinen automatischen Eingriff in die Fahrdynamik des Fahrzeugs durch die Lenkaktuatoren und/oder Bremsaktuatoren initiiert,
i) falls aber innerhalb des ersten fest vorgegebenen oder variablen Zeitraums, welcher unmittelbar nach der Ausgabe des ersten Warnsignals beginnt durch die zweite Sensoreinrichtung keine Betätigung der wenigstens einen, die Fahrdynamik des Fahrzeugs durch den Fahrer beeinflussenden Betätigungseinrichtung, aber mittels der ersten Sensoreinrichtung ein erfolgtes Überfahren der Fahrbahnmarkierung durch wenigstens ein Rad des Fahrzeugs detektiert wird, dann wird
j) die Warneinrichtung zur Ausgabe eines zweiten Warnsignal angesteuert und als automatischer Eingriff in die Fahrdynamik des Fahrzeugs mit Hilfe der Lenkaktuatoren und/oder der Bremsaktuatoren das Fahrzeug automatisch im überfahrenen Zustand der Fahrbahnmarkierung gehalten und dabei entlang der überfahrenen Fahrbahnmarkierung derart parallel weitergeführt, dass eine Längsmittelachse des Fahrzeugs um weniger als ein vorgegebener maximaler seitlicher Versatz von der Fahrbahnmarkierung versetzt ist, derart, dass die Fahrbahnmarkierung zwischen den Rädern der Achsen des Fahrzeugs angeordnet ist und
k) falls innerhalb eines zweiten fest vorgegebenen oder variablen Zeitraums, welcher unmittelbar nach der Ausgabe des zweiten Warnsignals beginnt, durch die zweite Sensoreinrichtung eine Betätigung der wenigstens einen die Fahrdynamik des Fahrzeugs durch den Fahrer beeinflussenden Betätigungseinrichtung detektiert wird, dann wird der automatische Eingriff in die Fahrdynamik des Fahrzeugs beendet, falls aber
l) innerhalb des zweiten vorgegebenen oder variablen Zeitraums, welcher unmittelbar nach der Ausgabe des zweiten Warnsignals beginnt, durch die zweite Sensoreinrichtung keine Betätigung der wenigstens einen die Fahrdynamik des Fahrzeugs durch den Fahrer beeinflussenden Betätigungseinrichtung detektiert wird, dann wird
   l1) das Fahrzeug mit Hilfe der Lenkaktuatoren und/oder der Bremsaktuatoren weiterhin automatisch im überfahrenen Zustand der Fahrbahnmarkierung gehalten und dabei entlang der überfahrenen Fahrbahnmarkierung derart parallel weitergeführt, dass die Längsmittelachse des Fahrzeugs um weniger als ein vorgegebener maximaler seitlicher Versatz von der Fahrbahnmarkierung versetzt ist, derart, dass die Fahrbahnmarkierung zwischen den Rädern der Achsen des Fahrzeugs angeordnet ist, und
   l2) unmittelbar nach Ablauf des zweiten vorgegebenen oder variablen Zeitraums, welcher unmittelbar nach der Ausgabe des zweiten Warnsignals beginnt, oder mit zeitlicher Verzögerung nach diesem Ablauf das Fahrzeug bis in den Stillstand abgebremst.

Dabei steuert oder regelt die elektronische Steuereinrichtung den automatischen Eingriff derart, dass quer zur Fahrtrichtung gesehen die Fahrbahnmarkierung zwischen den Rädern der Achsen des Fahrzeugs angeordnet ist, wobei die Längsmittelachse des Fahrzeugs um weniger als ein vorgegebener maximaler seitlicher Versatz von der Fahrbahnmarkierung seitlich versetzt ist. Dieser maximale seitliche Versatz ist bevorzugt kleiner als die halbe Spurweite des Fahrzeugs und insbesondere gleich Null.

Weiterhin ist die elektronische Steuereinrichtung bevorzugt ausgebildet, dass das Fahrzeug erst dann automatisch im überfahrenen Zustand der Fahrbahnmarkierung gehalten wird, wenn mittels der ersten Sensorreinrichtung zuvor überprüft worden ist, ob sich in Fahrtrichtung vor dem Fahrzeug ein Objekt, z.B. ein dort stehendes Fahrzeug auf dem Fahrbahnrand befindet und diese Überprüfung ergeben hat, dass dies nicht der Fall ist. Andernfalls ist die elektronische Steuereinrichtung bevorzugt ausgebildet, dass das Fahrzeug bevorzugt durch einen automatischen Eingriff in die Fahrdynamik auf die verlassene Fahrspur zurückgeführt wird.

Wie oben bereits ausgeführt, kann die elektronische Steuereinrichtung insbesondere einen elektronischen Lenkungsregler umfassen. Weiterhin kann ein vom Lenkungsregler gesteuertes Lenkungsstellglied, z.B. eine Hilfslenkeinrichtung vorhanden sein, welche aktiv auf die Lenkung des Fahrzeugs einwirkt, wobei der der seitliche Versatz der Längsmittelachse des Fahrzeugs in Bezug auf die Fahrbahnmarkierung die Regelgröße darstellt und als Sollgröße vorgegeben wird. Bevorzugt ist der seitliche Versatz gleich Null, so dass das Fahrzeug mit seiner Längsmittelachse von dem Fahrerassistenzsystem beispielsweise etwa kollinear in Bezug auf die Fahrbahnmarkierung geführt wird.

Insbesondere kann die erste Sensoreinrichtung ein Kamera- und/oder Radarsystem beinhalten. Die erste Sensoreinrichtung kann generell Umfeldsensoren wie z.B. die ein Kamerasystem, insbesondere wenigstens eine Videokamera und/oder ein Radarsystem und/oder ein Lasersystem und/oder ein GPS beinhaltet, aber auch eine digitale Karte, Ad-Hoc-Netzwerke, Car-to-Car-Kommunikation usw. nutzen, mit denen die Position des Fahrzeugs in Bezug zur Fahrspur ermittelt werden kann, sowie die Position, Breite, Geschwindigkeit und Bewegungsrichtung von Umfeldobjekten im Verkehrsraum ermittelt werden können. Die Signale der ersten Sensoreinrichtung können auch vorverarbeitet und dann über eine Schnittstelle oder von anderen Systemen oder über andere Systeme im Fahrzeug über eine Schnittstelle der elektronischen Steuereinrichtung zur Verfügung gestellt werden.

Besonders bevorzugt ist die wenigstens eine die Fahrdynamik des Fahrzeugs durch den Fahrer beeinflussende Betätigungseinrichtung ein Gaspedal, ein Bremspedal oder ein Lenkrad des Fahrzeugs und die zweite Sensoreinrichtung beinhaltet dann vorzugsweise einen elektrischen Messwertaufnehmer des Gaspedals, des elektrischen Bremspedals oder einen Lenkwinkelsensor des Lenkrads des Fahrzeugs. Dann kann über die Signale des oder der elektrischen Messaufnehmer eine Betätigung des Gaspedals, des Bremspedals oder des Lenkrads des Fahrzeugs und folglich ein Eingreifen des Fahrers in die Fahrdynamik des Fahrzeugs detektiert werden.

Gemäß einer Weiterbildung ist die elektronische Steuereinrichtung ausgebildet, dass sie eine Betätigung des Gaspedals, des Bremspedals oder des Lenkrads des Fahrzeugs anhand eines Vergleichs der Messwerte des elektrischen Messwertaufnehmers zu unterschiedlichen Zeitpunkten detektiert und miteinander vergleicht.

Die Erfindung betrifft auch ein Fahrzeug mit einem Fahrerassistenzsystem wie oben beschrieben oder mit einem Fahrerassistenzsystem, welches nach einem oben beschriebenen Verfahren gesteuert oder geregelt ist.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen.

Identische bzw. gleich wirkende Bauteile und Baugruppen sind in unterschiedlichen Ausführungsformen jeweils mit denselben Bezugszahlen bezeichnet.

Nachstehend ist ein Ausführungsbeispiel der Erfindung in der Zeichnung dargestellt und in der nachfolgenden Beschreibung näher erläutert. In der Zeichnung zeigt
- Fig.1: eine Draufsicht auf eine Fahrbahn mit einer rechten Fahrspur, entlang welcher sich ein Fahrzeug bewegt;
- Fig.2: eine Draufsicht auf die Fahrbahn von Fig.1, wobei sich das Fahrzeug einer Fahrbahnmarkierung der rechten Fahrspur nähert, welche die Fahrspur von einem rechten Fahrbahnrand oder von der rechten Bankett trennt;
- Fig.3: eine Draufsicht auf die Fahrbahn von Fig.1, wobei das Fahrzeug die Fahrbahnmarkierung der rechten Fahrspur überfahren hat und gesteuert oder geregelt durch eine bevorzugte Ausführungsform eines Fahrerassistenzsystems gemäß der Erfindung sich entlang dieser Fahrbahnmarkierung weiter bewegt;
- Fig.4: eine Draufsicht auf die Fahrbahn von Fig.1, wobei das Fahrzeug sich entlang der rechten Fahrbahnmarkierung weiter bewegt und dabei abgebremst wird;
- Fig.5: ein Flussdiagramm einer bevorzugten Ausführungsform eines Verfahrens zur Steuerung oder Regelung des Fahrerassistenzsystems gemäß der Erfindung.

### Beschreibung des Ausführungsbeispiels

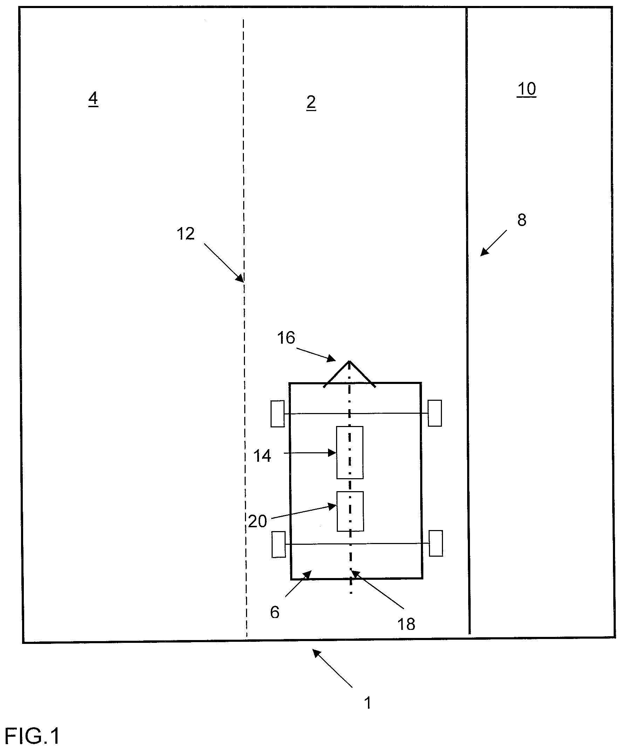

In **Fig.1** ist eine Draufsicht auf eine Fahrbahn 1, beispielsweise eine Autobahn mit einer rechten Fahrspur 2 und einer linken Fahrspur 4 gezeigt, wobei die Fahrspuren 2 und 4 beispielsweise von einem gleich gerichteten Verkehr befahren werden und wobei sich entlang der rechten Fahrspur 2 ein Fahrzeug 6, beispielsweise ein schweres Nutzfahrzeug bewegt. Die Fahrbahn 1 und auch die rechte Fahrspur 2 ist rechts außen von einer rechten, mittels einer durchgezogenen Linie gekennzeichneten Fahrbahnmarkierung 8 begrenzt, wobei jenseits der rechten Fahrbahnmarkierung 8 ein Fahrbahnrand oder Bankett 10 ausgebildet ist, welcher von wenigstens einem rechten Teil des Fahrzeug 6 befahrbar ist. Insofern stellt die rechte Fahrbahnmarkierung 8 eine rechte Grenzmarkierung der Fahrbahn 1 dar.

Die beiden Fahrspuren 2, 4 sind durch eine mittels einer gestrichelt gezeichneten Linie gekennzeichneten Fahrspurbegrenzung 12 voneinander getrennt. Weiterhin ist auch links außen an der Fahrbahn eine hier nicht sichtbare linke Fahrbahnmarkierung als Grenzmarkierung der Fahrbahn 1 vorhanden. **Fig.1** zeigt die Situation, in welcher das Fahrzeug 6 sich bestimmungsgemäß etwa in der Mitte der rechten Fahrspur 2 mit einer gewissen Geschwindigkeit bewegt.

Das Fahrzeug 6 ist mit einem hier nicht explizit gezeigten Fahrerassistenzsystem 14 ausgestattet, welches über eine erste Sensoreinrichtung 16 verfügt, mit welcher die Fahrbahn 1 samt Umgebung und insbesondere die rechte Fahrbahnmarkierung 8 detektiert wird. Bei der ersten Sensoreinrichtung 16 kann es sich insbesondere um eine Kamera- und/oder Radarreinrichtung handeln, welche die hier befahrene rechte Fahrspur 2 anhand der Fahrspurbegrenzung 12 und der rechten Fahrbahnmarkierung 8 identifiziert und anhand der gewonnenen Daten auch die Lage und Orientierung einer mittigen Längsmittelachse 18 des Fahrzeugs 6 in Bezug auf eine Mitte der rechten Fahrspur 2 oder auch in Bezug auf die rechte Fahrbahnmarkierung 8 ermitteln kann.

Weiterhin weist das Fahrzeug 6 in gewohnter Weise ein Gaspedal, ein Bremspedal zur Betätigung eines hier beispielsweise elektro-pneumatischen Betriebsbremseinrichtung sowie ein Lenkrad zur Betätigung einer hier beispielsweise elektromechanischen Lenkeinrichtung auf. Die elektro-pneumatische Betriebsbremseinrichtung weist eben einem elektrischen, vom Fahrer betätigbaren Bremswertgeber ein elektronisches Bremssteuergerät sowie von diesem elektrisch gesteuerte elektro-pneumatische Druckregelmodule auf, welche dann abhängig von einer Betätigung des Bremswertgebers einen pneumatischen Druck in pneumatischen Bremszylindern als Bremsaktuatoren einsteuern. Alternativ hierzu sind aber auch eine rein elektrische, rein pneumatische oder eine rein hydraulische sowie eine elektro-hydraulische Betriebsbremseinrichtung denkbar.

Da der Betätigungsgrad des Gaspedals, des Bremspedals sowie des Lenkrads heutzutage in der Regel mittels jeweils eines elektrischen Messwertaufnehmers detektiert wird, um die von den Messwertaufnehmern gelieferten Daten in zugeordnete elektronische Steuereinrichtungen einzusteuern, beispielsweise in die elektronische Motorsteuerung, in die elektronische Bremssteuerung und in die elektronische Lenksteuerung ist bereits eine zweiten Sensoreinrichtung 20 vorhanden, mit welcher durch das Fahrerassistenzsystem 14 eine Betätigung wenigstens einer die Fahrdynamik des Fahrzeugs durch den Fahrer beeinflussenden Betätigungseinrichtung des Fahrzeugs (Gaspedal, Bremspedal, Lenkrad) detektieren kann.

Beispielsweise weist das Fahrzeug eine elektromechanische oder elektrische Lenkung auf, welche durch ein Hilfslenksystem ergänzt wird, durch welches ein automatischer Lenkeingriff als automatischer Eingriff in die Fahrdynamik des Fahrzeugs 6 erfolgen kann. Dabei ist insbesondere eine Lenkungsregelung vorhanden, mit einem elektronischen Lenkungsregler sowie mit einem Lenkungsstellglied als Lenkaktuator, beispielsweise hier die Hilfslenkeinrichtung, welche aktiv auf die elektromechanische oder elektrische Lenkung des Fahrzeugs einwirkt und einen Ist-Lenkwinkel auf einen Soll-Lenkwinkel einregeln kann.

Weiterhin weist das Fahrerassistenzsystem 14 eine Sensorsignale von der ersten Sensoreinrichtung 16 und von der zweiten Sensoreinrichtung 20 empfangende elektronische Steuereinrichtung auf sowie eine von der elektronischen Steuereinrichtung gesteuerte, Warnsignale ausgebende Warneinrichtung. Die Warnsignale können akustische und/oder optische Warnsignale sein, wobei die Warneinrichtung derart am Fahrzeug 6 angeordnet ist, beispielsweise innerhalb einer Fahrerkabine, dass er die Warmsignale wahrnehmen kann.

Die elektronische Steuereinrichtung des Fahrerassistenzsystems 14 steuert dann Lenkaktuatoren der Lenkeinrichtung und/oder Bremsaktuatoren der Bremseinrichtung, durch welche die Fahrdynamik des Fahrzeugs beeinflussbar ist. Die elektronische Steuereinrichtung kann als Stand-Alone-Lösung ausgebildet oder aber in ein weiteres elektronisches Steuergerät integriert sein, beispielsweise in ein elektronisches Bremssteuergerät der Betriebsbremseinrichtung. Da die elektronischen Steuergeräte oder Steuereinrichtungen eines Fahrzeugs in der Regel untereinander über einen oder mehrere Datenbusse miteinander kommunizieren ist ein Datenaustausch untereinander gewährleistet wie auch ein Versenden von Steuerbefehlen.

Die elektronische Steuereinrichtung des Fahrerassistenzsystems wirkt weiterhin mit einer Zeitmesseinrichtung zusammen.

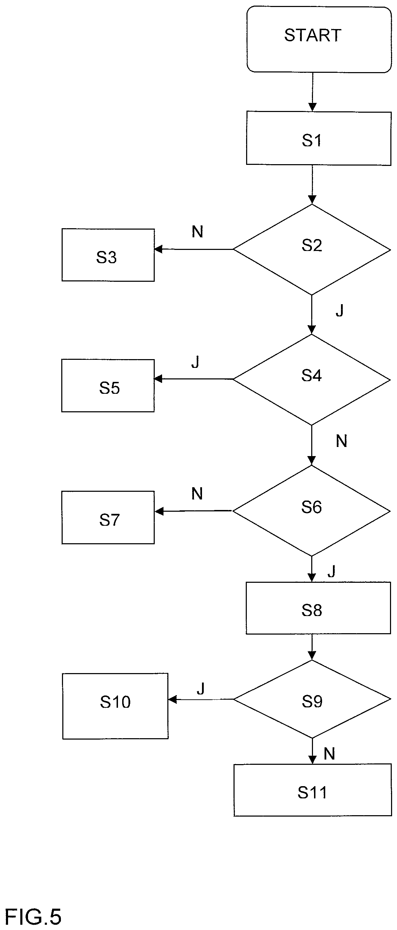

**Fig.5** zeigt ein Flussdiagramm einer bevorzugten Ausführungsform eines Verfahrens zur Steuerung oder Regelung des Fahrerassistenzsystems gemäß der Erfindung.

Nach dem Start des Verfahrens, für welchen beispielsweise eine Betätigung eines hierfür vorgesehenen separaten Schalters vorgesehen ist, wird in einem Schritt S1 mittels der ersten Sensoreinrichtung 16 die Fahrbahnspur 2 detektiert, auf welcher sich das Fahrzeug 6 gerade bewegt, d.h. beispielsweise hier die rechte Fahrspur 2 anhand einer Identifikation der Fahrspurbegrenzung 12 und der rechten Fahrbahnmarkierung 8 und anhand der gewonnenen Daten auch die Lage und gegebenenfalls auch die Orientierung der mittigen Längsmittelachse 18 des Fahrzeugs 6 in Bezug auf die rechte Fahrbahnmarkierung 8 ermittelt. Hierbei können auch oder ausschließlich in Bezug auf das Fahrzeug 6 externe Daten, wie beispielsweise von einem GPS verwendet werden, so dass die erste Sensoreinrichtung 16 auch solche externen Signalquellen umfassen kann.

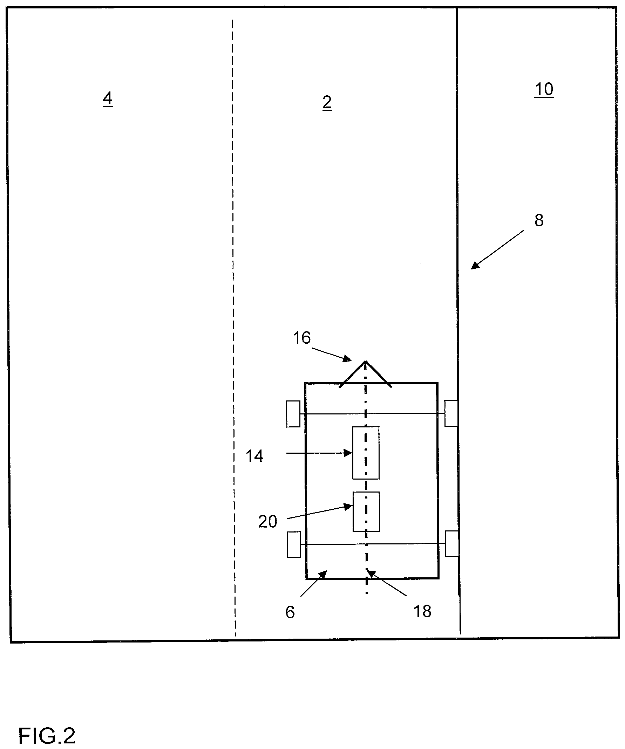

Die elektronische Steuereinrichtung des Fahrerassistenzsystems 14 ist ausgebildet, dass sie bei einem durch die erste Sensoreinrichtung 16 detektiertem drohenden Verlassen der rechten Fahrspur 2 durch das Fahrzeug 6 insbesondere in Richtung rechte Fahrbahnmarkierung 8 die Warneinrichtung zur Ausgabe eines ersten Warnsignals ansteuert. Diese Situation ist in **Fig.2** gezeigt und durch ein "J" für "JA" in Schritt S2 von **Fig.5** symbolisiert, wobei kein drohendes Verlassen der rechten Fahrspur durch das Fahrzeug 6 ein "N" für "NEIN" bedeutet. Im verneinenden Fall wird in Schritt S3 kein erstes Warnsignal erzeugt und das Verfahren abgebrochen, weil dann bei einem etwa mittig auf der rechten Fahrspur 2 gemäß **Fig.1** fahrenden Fahrzeug keine Eingriffsnotwendigkeit des Fahrerassistenzsystems 14 besteht.

Die elektronische Steuereinrichtung des Fahrerassistenzsystems 14 ist weiterhin ausgebildet, dass falls innerhalb eines ersten fest vorgegebenen oder variablen Zeitraums, welcher unmittelbar nach der Ausgabe des ersten Warnsignals beginnt ("J" in Schritt S2 wegen drohendem Verlassen der Fahrspur 2 in Richtung rechte Fahrbahnmarkierung 8) durch die zweite Sensoreinrichtung 20 eine Betätigung der wenigstens einen die Fahrdynamik des Fahrzeugs 6 durch den Fahrer beeinflussenden Betätigungseinrichtung detektiert wird, was "J" für "JA" in Schritt S4 entspricht, die elektronische Steuereinrichtung des Fahrerassistenzsystems 14 gemäß Schritt S5 keinen automatischen Eingriff in die Fahrdynamik des Fahrzeugs durch die Lenkaktuatoren und/oder durch die Bremsaktuatoren vornimmt. Denn mit der Betätigung des Gaspedals, des Bremspedals und/oder des Lenkrads hat der Fahrer auf das erste Warnsignal hin der elektronischen Steuereinrichtung des Fahrerassistenzsystems signalisiert, dass er die Verantwortung übernommen hat und das Fahrzeug selbst wieder in die Mitte der rechten Fahrspur 2 zurücksteuern kann.

Falls aber in Schritt S4 innerhalb des ersten fest vorgegebenen oder variablen Zeitraums, welcher unmittelbar nach der Ausgabe des ersten Warnsignals beginnt ("J" in Schritt S2 wegen drohendem Verlassen der Fahrspur 2 in Richtung rechte Fahrbahnmarkierung 8) durch die zweite Sensoreinrichtung 20 keine Betätigung der wenigstens einen, die Fahrdynamik des Fahrzeugs durch den Fahrer beeinflussenden Betätigungseinrichtung festgestellt wird, was "N" für "NEIN" in Schritt S4 entspricht, dann wird in Schritt S6 mittels der ersten Sensoreinrichtung 16 ein erfolgtes Überfahren der rechten Fahrbahnmarkierung 8 durch wenigstens ein Rad des Fahrzeugs 6 überwacht. Dies geschieht beispielsweise dadurch, dass der Abstand der Längsmittelachse 18 des Fahrzeugs 6 von der rechten Fahrbahnmarkierung 8 bestimmt und in Bezug zur Spurweite des Fahrzeugs 6 gesetzt wird.

Falls in Schritt S6 der elektronischen Steuereinrichtung des Fahrerassistenzsystems durch die erste Sensoreinrichtung 16 signalisiert wird, dass die rechte Fahrbahnmarkierung 8 durch wenigstens ein Rad des Fahrzeugs nicht überfahren wurde, was "N" für "NEIN" in Schritt S6 entspricht, so findet gemäß Schritt S7 seitens der elektronischen Steuereinrichtung des Fahrerassistenzsystems kein automatischer Eingriff in die Fahrdynamik des Fahrzeugs durch die Lenkaktuatoren und/oder durch die Bremsaktuatoren statt. Denn dann besteht (noch) kein Handlungsbedarf.

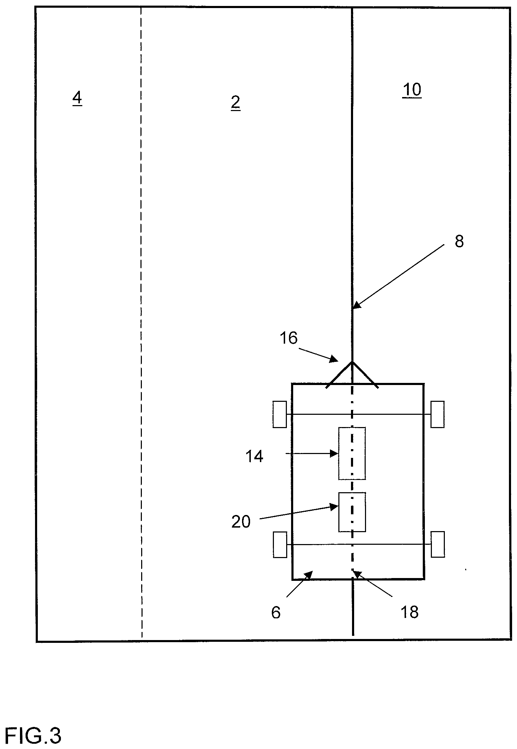

Falls aber in Schritt S6 der elektronischen Steuereinrichtung des Fahrerassistenzsystems signalisiert wird, dass die rechte Fahrbahnmarkierung 8 durch wenigstens ein Rad des Fahrzeugs bereits vollständig überfahren wurde, was "J" für "JA" in Schritt S6 entspricht, so ist die elektronische Steuereinrichtung des Fahrerassistenzsystems weiterhin ausgebildet ist, dass gemäß Schritt S8 die Warneinrichtung zur Ausgabe eines zweiten Warnsignal angesteuert wird und als automatischer Eingriff in die Fahrdynamik des Fahrzeugs mit Hilfe der Lenkaktuatoren und/oder der Bremsaktuatoren das Fahrzeug 6 automatisch im überfahrenen Zustand der rechten Fahrbahnmarkierung 8 gehalten und entlang der überfahrenen Fahrbahnmarkierung 8 derart parallel zu dieser weitergeführt wird, dass die Längsmittelachse 18 des Fahrzeugs 6 etwa koaxial mit der rechten Fahrbahnmarkierung 8 ist. Alternativ kann aber auch ein gewisser maximaler seitlicher Versatz der Längsmittelachse 18 des Fahrzeugs 6 in Bezug auf die rechte Fahrbahnmarkierung 8 zu beiden Seiten hin zugelassen werden. Der maximale seitliche Versatz ist dabei bevorzugt kleiner als die halbe Spurweite des Fahrzeugs 6. Vorzugsweise ist der maximale seitliche Versatz aber im Wesentlichen gleich Null. Diese Situation ist in **Fig.3** gezeigt, bei welcher jeweils ein rechtes Rad jeder Achse sich jenseits der rechten Fahrbahnmarkierung 8 befindet. Der automatische fahrdynamische Eingriff kann dabei mittels der Lenkeinrichtung alleine und/oder durch die Betriebsbremseinrichtung beispielsweise durch eine derartige elektrische Ansteuerung der Druckregelmodule erfolgen, dass z.B. mittels asymmetrischer oder einseitiger Bremsungen eine gewisse Lenkwirkung auf das Fahrzeug 6 ausgeübt wird, um es auf dem oben beschriebenen Soll-Trajektorie hier in Form der rechten Fahrbahnmarkierung 8 zu halten, welche ja neben geraden Abschnitten auch gekrümmte Abschnitte enthalten kann. Weiterhin ist hier neben einer Steuerung auch eine Regelung der Lage der Längsmittelachse 18 des Fahrzeugs 6 in Bezug auf die rechte Fahrbahnmarkierung möglich.

Falls dann im Schritt S9 von der elektronischen Steuereinrichtung des Fahrerassistenzsystems festgestellt wird, dass innerhalb eines zweiten fest vorgegebenen oder variablen Zeitraums, welcher unmittelbar nach der Ausgabe des zweiten Warnsignals beginnt, durch die zweite Sensoreinrichtung 20 eine Betätigung der wenigstens einen die Fahrdynamik des Fahrzeugs durch den Fahrer beeinflussenden Betätigungseinrichtung detektiert wird, was "J" für "JA" in Schritt S9 entspricht, dann wird der automatische Eingriff in die Fahrdynamik des Fahrzeugs gemäß Schritt S10 beendet. Denn mit der Betätigung des Gaspedals, des Bremspedals und/oder des Lenkrads hat der Fahrer auf das zweite Warnsignal hin der elektronischen Steuereinrichtung des Fahrerassistenzsystems 14 signalisiert, dass er die Verantwortung übernommen hat und das Fahrzeug 6 selbst wieder in die Mitte der rechten Fahrspur 2 zurücksteuern kann.

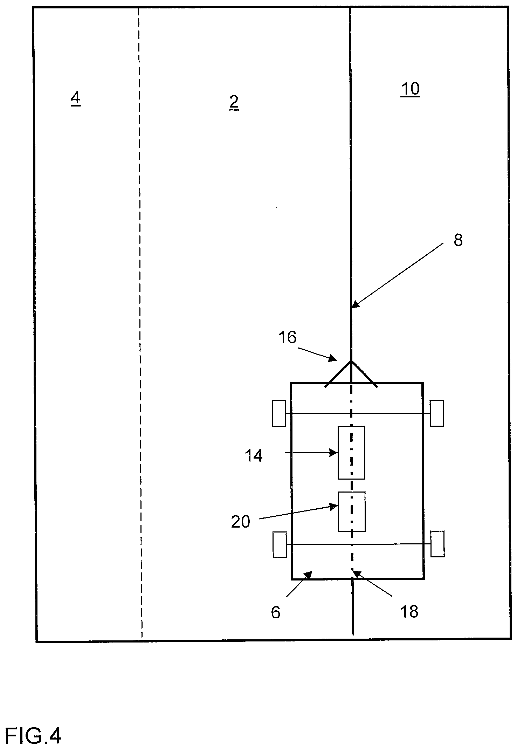

Falls aber im Schritt S9 von der elektronischen Steuereinrichtung des Fahrerassistenzsystems festgestellt wird, dass innerhalb des zweiten vorgegebenen oder variablen Zeitraums, welcher unmittelbar nach der Ausgabe des zweiten Warnsignals beginnt, durch die zweite Sensoreinrichtung 20 keine Betätigung der wenigstens einen die Fahrdynamik des Fahrzeugs durch den Fahrer beeinflussenden Betätigungseinrichtung detektiert wird, was "N" für "NEIN" in Schritt S9 entspricht, dann wird gemäß Schritt 11 das Fahrzeug 6 mit Hilfe der Lenkaktuatoren und/oder der Bremsaktuatoren weiterhin automatisch im teilweise überfahrenen Zustand der rechten Fahrbahnmarkierung 8 gehalten und entlang der überfahrenen rechten Fahrbahnmarkierung 8 derart parallel zu dieser weitergeführt, dass die Längsmittelachse 18 des Fahrzeugs 6 den vorgegebenen maximalen seitlichen Versatz von der rechten Fahrbahnmarkierung 8 einhält (Steuerung oder Regelung), welcher hier beispielsweise gleich Null ist und unmittelbar nach Ablauf des zweiten vorgegebenen oder variablen Zeitraums, welcher unmittelbar nach der Ausgabe des zweiten Warnsignals beginnt, oder mit zeitlicher Verzögerung nach diesem Ablauf das Fahrzeug 2 durch die Betriebsbremseinrichtung bis in den Stillstand abgebremst. Diese Situation ist in **Fig.4** gezeigt.

In dem in den Stillstand eingebremsten Zustand des Fahrzeugs 6 von **Fig.4** kann dann die elektronische Steuereinrichtung des Fahrerassistenzsystems 14 das Fahrzeug 6 in einen sicheren Modus bringen, in welchem beispielsweise die Zündung ausgeschaltet wird. Darüber hinaus können noch weitere Sicherheitsmaßnahmen ergriffen werden wie beispielsweise eine Straffung von Rückhalteeinrichtungen wie Sicherheitsgurten.

Das gleiche Verfahren bzw. dessen Steuerung durch das Fahrerassistenzsystem 14 ist auch dann anwendbar, wenn sich das Fahrzeug 6 etwa bei Start des erfindungsgemäßen Verfahrens auf der linken Fahrspur 4 befindet und dann Tendenz zeigt, sich in Richtung auf die rechte Fahrbahnmarkierung 8 zu bewegen.

Es ist weiterhin klar, dass das erfindungsgemäße Verfahren bzw. das erfindungsgemäße Fahrerassistenzsystem 14 nicht auf eine Anwendung auf Rechtsverkehr und dann rechte Fahrbahnmarkierungen 8 beschränkt ist, sondern auch für Linksverkehr und linke Fahrbahnmarkierungen anwendbar ist.

### BEZUGSZEICHENLISTE

- 1: Fahrbahn
- 2: rechte Fahrspur
- 4: linke Fahrspur
- 6: Fahrzeug
- 8: rechte Fahrbahnmarkierung
- 10: Bankett
- 12: Fahrspurbegrenzung
- 14: Fahrerasssitenzsystem
- 16: erste Sensoreinrichtung
- 18: Längsmittelachse
- 20: zweite Sensoreinrichtung

## Patentansprüche

1. Verfahren zur Steuerung oder Regelung eines Fahrerassistenzsystems (14) eines Fahrzeugs (6), bei welchem
a) mit Hilfe einer ersten Sensoreinrichtung (16) von einer Fahrbahn (1) wenigstens eine Fahrspur (2) und eine Fahrbahnmarkierung (8) detektiert wird, welche die Fahrspur (2) von einem Fahrbahnrand (10) trennt, und
b) mit Hilfe einer zweiten Sensoreinrichtung (20) eine Betätigung wenigstens einer, die Fahrdynamik des Fahrzeugs durch den Fahrer beeinflussenden Betätigungseinrichtung des Fahrzeugs (6) detektiert wird,
c) mit Hilfe von Lenkaktuatoren und/oder Bremsaktuatoren die Fahrdynamik des Fahrzeugs (6) beeinflusst wird, und bei welchem
d) bei einem durch die erste Sensoreinrichtung (16) detektiertem drohenden Verlassen der Fahrspur (2) durch das Fahrzeug ein erstes Warnsignal ausgegeben wird, **dadurch gekennzeichnet, dass**
e) falls innerhalb eines ersten fest vorgegebenen oder variablen Zeitraums, welcher unmittelbar nach der Ausgabe des ersten Warnsignals beginnt, durch die zweite Sensoreinrichtung (20) eine Betätigung der wenigstens einen, die Fahrdynamik des Fahrzeugs (6) durch den Fahrer beeinflussenden Betätigungseinrichtung detektiert wird, kein automatischer Eingriff in die Fahrdynamik des Fahrzeugs (6) durch die Lenkaktuatoren und/oder Bremsaktuatoren erfolgt,
f) falls aber innerhalb des ersten vorgegebenen oder variablen Zeitraums, welcher unmittelbar nach der Ausgabe des ersten Warnsignals beginnt, durch die zweite Sensoreinrichtung (20) keine Betätigung der wenigstens einen, die Fahrdynamik des Fahrzeugs (6) durch den Fahrer beeinflussenden Betätigungseinrichtung, aber durch die erste Sensoreinrichtung (16) ein bereits erfolgtes Überfahren der Fahrbahnmarkierung (8) durch wenigstens ein Rad des Fahrzeugs (6) detektiert wird, dann wird
g) ein zweites Warnsignal ausgegeben und als automatischer Eingriff in die Fahrdynamik des Fahrzeugs (6) mit Hilfe der Lenkaktuatoren und/oder der Bremsaktuatoren das Fahrzeug (6) automatisch im überfahrenen Zustand der Fahrbahnmarkierung (8) gehalten und dabei entlang der überfahrenen Fahrbahnmarkierung (8) derart parallel weitergeführt, dass eine Längsmittelachse (18) des Fahrzeugs (6) um weniger als ein vorgegebener maximaler seitlicher Versatz von der Fahrbahnmarkierung (8) versetzt ist, derart, dass die Fahrbahnmarkierung (8) zwischen den Rädern der Achsen des Fahrzeugs (6) angeordnet ist, und
h) falls innerhalb eines zweiten fest vorgegebenen oder variablen Zeitraums, welcher unmittelbar nach der Ausgabe des zweiten Warnsignals beginnt, durch die zweite Sensoreinrichtung (20) eine Betätigung der wenigstens einen die Fahrdynamik des Fahrzeugs (6) durch den Fahrer beeinflussenden Betätigungseinrichtung detektiert wird, dann wird der automatische Eingriff in die Fahrdynamik des Fahrzeugs (6) beendet, falls aber
i) innerhalb des zweiten fest vorgegebenen oder variablen Zeitraums, welcher unmittelbar nach der Ausgabe des zweiten Warnsignals beginnt, durch die zweite Sensoreinrichtung keine Betätigung der wenigstens einen die Fahrdynamik des Fahrzeugs (6) durch den Fahrer beeinflussenden Betätigungseinrichtung detektiert wird, dann wird
i1) das Fahrzeug (6) mit Hilfe der Lenkaktuatoren und/oder der Bremsaktuatoren weiterhin automatisch im überfahrenen Zustand der Fahrbahnmarkierung (8) gehalten und entlang der überfahrenen Fahrbahnmarkierung derart parallel weitergeführt, dass die Längsmittelachse (18) des Fahrzeugs (6) um weniger als der vorgegebene maximale seitliche Versatz von der Fahrbahnmarkierung (8) versetzt ist, derart, dass die Fahrbahnmarkierung (8) zwischen den Rädern der Achsen des Fahrzeugs (6) angeordnet ist, und
i2) unmittelbar nach Ablauf des zweiten vorgegebenen oder variablen Zeitraums oder mit zeitlicher Verzögerung nach diesem Ablauf das Fahrzeug (6) automatisch bis in den Stillstand abgebremst.

2. Verfahren nach Anspruch 1, **dadurch gekennzeichnet, dass** das Fahrzeug (6) in dem in den Stillstand eingebremsten Zustand in einen sicheren Modus gebracht wird, in welchem wenigstens eine der folgenden Aktionen durchgeführt wird: Eine Parkbremse wird zugespannt, der zuletzt in einer Betriebsbremse wirksame Bremsdruck wird aufrecht erhalten, eine Warnblinkanlage wird eingeschaltet.

3. Verfahren nach Anspruch 1 oder 2, **dadurch gekennzeichnet, dass** das Fahrzeug (6) erst dann automatisch im überfahrenen Zustand der Fahrbahnmarkierung (8) gehalten wird, wenn mittels der ersten Sensorreinrichtung (16) zuvor überprüft worden ist, ob sich in Fahrtrichtung vor dem Fahrzeug ein Objekt auf dem Fahrbahnrand (10) befindet und diese Überprüfung ergeben hat, dass dies nicht der Fall ist.

4. Verfahren nach einem der vorhergehenden Ansprüche, **dadurch gekennzeichnet, dass** mittels der ersten Sensoreinrichtung (16) ein erfolgtes Überfahren der Fahrbahnmarkierung (8) durch wenigstens zwei Räder an unterschiedlichen Achsen und an einer Fahrzeugseite detektiert werden muss, bevor Schritt g) von Anspruch 1 ausgeführt wird.

5. Verfahren nach einem der vorhergehenden Ansprüche, **dadurch gekennzeichnet, dass** der seitliche Versatz gemäß Schritt g) von Anspruch 1 eine Regelgröße darstellt, welche über eine Lenkungsregelung auf eine Sollgröße eingeregelt wird.

6. Verfahren nach einem der vorhergehenden Ansprüche, **dadurch gekennzeichnet, dass** der automatische Eingriff in die Fahrdynamik des Fahrzeugs (6) durch ein Hilfslenksystem und/oder ein Steer-by-Brake-System bewerkstelligt wird.

7. Fahrerassistenzsystem (14) eines Fahrzeugs (6), mit
a) einer ersten Sensoreinrichtung (16), mit welcher von einer Fahrbahn (1) wenigstens eine Fahrspur (2) und eine Fahrbahnmarkierung (8) detektiert wird, welche die Fahrspur (2) von einem Fahrbahnrand (10) trennt, und
b) mit einer zweiten Sensoreinrichtung (20), mit welcher eine Betätigung wenigstens einer die Fahrdynamik des Fahrzeugs (6) durch den Fahrer beeinflussenden Betätigungseinrichtung des Fahrzeugs (6) detektiert wird, und
c) mit einer Sensorsignale von der ersten Sensoreinrichtung (16) und von der zweiten Sensoreinrichtung (20) empfangenden elektronischen Steuereinrichtung, sowie mit
d) einer von der elektronischen Steuereinrichtung gesteuerten, Warnsignale ausgebenden Warneinrichtung, und
e) mit durch die elektronische Steuereinrichtung steuerbaren Lenkaktuatoren und/oder Bremsaktuatoren, durch welche die Fahrdynamik des Fahrzeugs (6) beeinflussbar ist, wobei
f) die elektronische Steuereinrichtung ausgebildet ist, dass sie bei einem durch die erste Sensoreinrichtung (16) detektiertem drohenden Verlassen der Fahrspur (2) durch das Fahrzeug (6) die Warneinrichtung zur Ausgabe eines ersten Warnsignals ansteuert, **dadurch gekennzeichnet, dass**
g) die Steuereinrichtung mit einer Zeitmesseinrichtung zusammenwirkt und weiterhin ausgebildet ist, dass
h) falls innerhalb eines ersten fest vorgegebenen oder variablen Zeitraums, welcher unmittelbar nach der Ausgabe des ersten Warnsignals beginnt durch die zweite Sensoreinrichtung (20) eine Betätigung der wenigstens einen die Fahrdynamik des Fahrzeugs (6) durch den Fahrer beeinflussenden Betätigungseinrichtung detektiert wird, die Steuereinrichtung keinen automatischen Eingriff in die Fahrdynamik des Fahrzeugs (6) durch die Lenkaktuatoren und/oder Bremsaktuatoren initiiert,
i) falls aber innerhalb des ersten fest vorgegebenen oder variablen Zeitraums, welcher unmittelbar nach der Ausgabe des ersten Warnsignals beginnt durch die zweite Sensoreinrichtung (20) keine Betätigung der wenigstens einen, die Fahrdynamik des Fahrzeugs (6) durch den Fahrer beeinflussenden Betätigungseinrichtung, aber mittels der ersten Sensoreinrichtung (16) ein erfolgtes Überfahren der Fahrbahnmarkierung (8) durch wenigstens ein Rad des Fahrzeugs (6) detektiert wird, dann wird
j) die Warneinrichtung zur Ausgabe eines zweiten Warnsignal angesteuert und als automatischer Eingriff in die Fahrdynamik des Fahrzeugs mit Hilfe der Lenkaktuatoren und/oder der Bremsaktuatoren das Fahrzeug automatisch im überfahrenen Zustand der Fahrbahnmarkierung (8) gehalten und dabei entlang der überfahrenen Fahrbahnmarkierung (8) derart parallel weitergeführt, dass eine Längsmittelachse (18) des Fahrzeugs (6) um weniger als ein vorgegebener maximaler seitlicher Versatz von der Fahrbahnmarkierung (8) versetzt ist, derart, dass die Fahrbahnmarkierung (8) zwischen den Rädern der Achsen des Fahrzeugs (6) angeordnet ist, und
k) falls innerhalb eines zweiten fest vorgegebenen oder variablen Zeitraums, welcher unmittelbar nach der Ausgabe des zweiten Warnsignals beginnt, durch die zweite Sensoreinrichtung (20) eine Betätigung der wenigstens einen die Fahrdynamik des Fahrzeugs 86) durch den Fahrer beeinflussenden Betätigungseinrichtung detektiert wird, dann wird der automatische Eingriff in die Fahrdynamik des Fahrzeugs (6) beendet, falls aber
l) innerhalb des zweiten vorgegebenen oder variablen Zeitraums, welcher unmittelbar nach der Ausgabe des zweiten Warnsignals beginnt, durch die zweite Sensoreinrichtung (20) keine Betätigung der wenigstens einen die Fahrdynamik des Fahrzeugs (6) durch den Fahrer beeinflussenden Betätigungseinrichtung detektiert wird, dann wird
l1) das Fahrzeug (6) mit Hilfe der Lenkaktuatoren und/oder der Bremsaktuatoren weiterhin automatisch im überfahrenen Zustand der Fahrbahnmarkierung (8) gehalten und entlang der überfahrenen Fahrbahnmarkierung derart parallel weitergeführt, dass die Längsmittelachse (18) des Fahrzeugs (6) um weniger als der vorgegebene maximale seitliche Versatz von der Fahrbahnmarkierung (8) versetzt ist, derart, dass die Fahrbahnmarkierung (8) zwischen den Rädern der Achsen des Fahrzeugs (6) angeordnet ist, und
l2) unmittelbar nach Ablauf des zweiten vorgegebenen oder variablen Zeitraums, welcher unmittelbar nach der Ausgabe des zweiten Warnsignals beginnt, oder mit zeitlicher Verzögerung nach diesem Ablauf das Fahrzeug (6) bis in den Stillstand abgebremst.

8. Fahrerassistenzsystem nach Anspruch 7, **dadurch gekennzeichnet, dass** die elektronische Steuereinrichtung den automatischen Eingriff derart steuert oder regelt, dass die Fahrbahnmarkierung (8) zwischen den Rädern der Achsen des Fahrzeugs (6) angeordnet und die Längsmittelachse (18) des Fahrzeugs weniger als der vorgegebene maximale seitliche Versatz von der Fahrbahnmarkierung (8) versetzt ist.

9. Fahrerassistenzsystem nach Anspruch 7 oder 8, **dadurch gekennzeichnet, dass** die elektronische Steuereinrichtung ausgebildet ist, dass das Fahrzeug (6) erst dann automatisch im überfahrenen Zustand der Fahrbahnmarkierung (8) gehalten wird, wenn mittels der ersten Sensorreinrichtung (16) zuvor überprüft worden ist, ob sich in Fahrtrichtung vor dem Fahrzeug ein Objekt auf dem Fahrbahnrand (10) befindet und diese Überprüfung ergeben hat, dass dies nicht der Fall ist.

10. Fahrerassistenzsystem nach einem der Ansprüche 7 bis 9, **dadurch gekennzeichnet, dass** die elektronische Steuereinrichtung einen elektronischen Lenkungsregler umfasst und dass vom Lenkungsregler gesteuertes Lenkungsstellglied vorhanden ist, welches aktiv auf eine Lenkung des Fahrzeugs (6) einwirkt, wobei der der seitliche Versatz der Längsmittelachse (18) des Fahrzeugs (6) in Bezug auf die Fahrbahnmarkierung (8) die Regelgröße darstellt und als Sollgröße vorgegeben wird.

11. Verfahren zur Steuerung oder Regelung eines Fahrerassistenzsystems nach einem der Ansprüche 1 bis 6 oder Fahrerassistenzsystem nach einem der Ansprüche 7 bis 10, **dadurch gekennzeichnet, dass** die erste Sensoreinrichtung (16) ein Kamerasystem und/oder ein Radarsystem und/oder ein Lasersystem und/oder ein GPS beinhaltet.

12. Verfahren zur Steuerung oder Regelung eines Fahrerassistenzsystems nach einem der Ansprüche 1 bis 6 oder Fahrerassistenzsystem nach einem der Ansprüche 7 bis 10, **dadurch gekennzeichnet, dass** die wenigstens eine die Fahrdynamik des Fahrzeugs (6) durch den Fahrer beeinflussende Betätigungseinrichtung ein Gaspedal, ein Bremspedal oder ein Lenkrad des Fahrzeugs beinhaltet und die zweite Sensoreinrichtung (20) einen elektrischen Messwertaufnehmer des Gaspedals, des elektrischen Bremspedals oder einen Lenkwinkelsensor des Lenkrads des Fahrzeugs (6) beinhaltet.

13. Verfahren zur Steuerung oder Regelung eines Fahrerassistenzsystems nach Anspruch 12 oder Fahrerassistenzsystem nach Anspruch 12, **dadurch gekennzeichnet, dass** die elektronische Steuereinrichtung ausgebildet ist, dass sie eine Betätigung des Gaspedals, des Bremspedals oder des Lenkrads des Fahrzeugs anhand eines Vergleichs der Messwerte des elektrischen Messwertaufnehmers zu unterschiedlichen Zeitpunkten detektiert und miteinander vergleicht.

14. Verfahren zur Steuerung oder Regelung eines Fahrerassistenzsystems nach einem der Ansprüche 1 bis 6 oder Fahrerassistenzsystem nach einem der Ansprüche 7 bis 10, **dadurch gekennzeichnet, dass** der vorgegebene maximale seitliche Versatz der Längsmittelachse (18) des Fahrzeugs in Bezug zu der Fahrbahnmarkierung (8) kleiner als die halbe Spurweite des Fahrzeugs (6) ist.

15. Fahrzeug mit einem Fahrerassistenzsystem (14) nach einem der Ansprüche 7 bis 14 oder Fahrzeug mit einem Fahrerassistenzsystem (14), welches nach einem Verfahren nach einem der Ansprüche 1 bis 6 gesteuert ist.

## Claims

1. A method for controlling or regulating a driver assistance system (14) of a vehicle (6) in which
a) on a carriageway (1) a first sensor device (16) detects at least one driving lane (2) and one carriageway marking (8) that separates the driving lane (2) from the roadside (10), and
b) a second sensor device (20) detects the actuation of at least one actuation device of the vehicle (6) that enables the driver to influence the driving dynamics of the vehicle (6),
c) the driving dynamics of the vehicle (6) is influenced by means of steering actuators and/or brake actuators, and in which
d) a first warning signal is emitted if the first sensor device (16) detects a risk that the vehicle (8) may depart from the driving lane (2),
**characterised in that**
e) if the second sensor device (20) detects the actuation of the at least one actuating device that enables the driver to influence the driving dynamics of the vehicle (6) within a first definitively pre-set or variable time period starting immediately after the emission of the first warning signal there is no automatic intervention in the driving dynamics of the vehicle (6) by the steering actuators and/or brake actuators,
f) if, however, the second sensor device (20) fails to detect the actuation of the at least one actuating device that enables the driver to influence the driving dynamics of the vehicle (6) within the first pre-set or variable time period starting immediately after the emission of the first warning signal but the first sensor device (16) detects that at least one wheel of the vehicle (6) has already crossed the carriageway marking (8), then
g) a second warning signal is emitted and the vehicle is automatically held in the "crossed carriageway marking (8)" state by an automatic intervention in the driving dynamics of the vehicle effected by the steering actuators and/or the brake actuators, during which time it continues to be guided in parallel along the crossed carriageway marking (8) such that a longitudinal centre axis (18) of the vehicle (6) is offset by less than a pre-set maximum lateral offset in relation to the carriageway marking (8) such that the carriageway marking (8) is located between the wheels of the axles of the vehicle (6), and
h) if the second sensor device (20) detects the actuation of the at least one actuating device that enables the driver to influence the driving dynamics of the vehicle (6) within a second definitively pre-set or variable time period starting immediately after the emission of the second warning signal the automatic intervention in the driving dynamics of the vehicle (6) is ended, but if
i) the second sensor device (20) fails to detect the actuation of the at least one actuating device that enables the driver to influence the driving dynamics of the vehicle (6) within the second pre-set or variable time period starting immediately after the emission of the second warning signal, then i1)
the vehicle (6) continues to be held automatically in the "crossed carriageway marking (8)" state by the steering actuators and/or the brake actuators and to be guided in parallel along the crossed carriageway marking such that the longitudinal centre axis (18) of the vehicle (6) is offset by less than the pre-set maximum lateral offset in relation to the carriageway marking (8) such that the carriageway marking (8) is located between the wheels of the axles of the vehicle (6), and
i2) the vehicle (6) is braked to a standstill immediately on expiry of the second pre-set or variable time period or with a time delay after it expires.

2. A method according to claim 1, **characterised in that** once braked to a standstill the vehicle (6) is switched to a safe mode in which at least one of the following actions is carried out: a parking brake is applied; the last effective braking pressure in a service brake is maintained; a hazard warning light system is switched on.

3. A method according to claim 1 or 2, **characterised in that** the vehicle (6) is not automatically held in the "crossed carriageway marking (8)" state until the first sensor device (16) has verified whether any object is located at the roadside (10) in front of the vehicle in the direction of travel and this verification has established that this is not the case.

4. A method according to any one of the preceding claims, **characterised in that** the first sensor device (16) has to detect that at least two wheels on different axles on one side of the vehicle have crossed the carriageway marking (8) before step g) of claim 1 is carried out.

5. A method according to any one of the preceding claims, **characterised in that** the lateral offset described in step g) of claim 1 represents a control variable that is adjusted to a setpoint by a steering control system.

6. A method according to any one of the preceding claims, **characterised in that** the automatic intervention in the driving dynamics of the vehicle (6) is effected by an auxiliary steering system and/or a steer-by-brake system.

7. A driver assistance system (14) of a vehicle (6), having
a) a first sensor device (16) that on a carriageway (10) detects at least one driving lane (2) and one carriageway marking (8) that separates the driving lane (2) from a roadside (10), and
b) a second sensor device (20) that detects the actuation of at least one actuating device that enables the driver to influence the driving dynamics of the vehicle (6), and
c) an electronic control device that receives sensor signals from the first sensor device (16) and the second sensor device (20), and
d) a warning device that is controlled by the electronic control device and emits warning signals,
e) steering actuators and/or brake actuators that are controlled by the electronic control device and are able to influence the driving dynamics of the vehicle (6),
f) the electronic control device being designed so as to actuate the warning device to emit a first warning signal if the first sensor device (16) detects a risk that the vehicle (6) may depart from the driving lane (2),
**characterised in that**
g) the control device cooperates with a timing device and is further designed such that
h) if the second sensor device (20) detects the actuation of the at least one actuating device that enables the driver to influence the driving dynamics of the vehicle (6) within a first definitively pre-set or variable time period starting immediately after the emission of the first warning signal the control device initiates no automatic intervention in the driving dynamics of the vehicle (6) by the steering actuators and/or brake actuators,
i) if, however, the second sensor device (20) fails to detect the actuation of the at least one actuating device that enables the driver to influence the driving dynamics of the vehicle (6) within the first pre-set or variable time period starting immediately after the emission of the first warning signal but the first sensor device (16) detects that at least one wheel of the vehicle (6) has crossed the carriageway marking (8), then
j) the warning device for emitting a second warning signal is actuated and the vehicle is automatically held in the "crossed carriageway marking (8)" state by an automatic intervention in the driving dynamics of the vehicle effected by the steering actuators and/or the brake actuators, during which time it continues to be guided in parallel along the crossed carriageway marking (8) such that the longitudinal centre axis (18) of the vehicle (6) is offset by less than a pre-set maximum lateral offset in relation to the carriageway marking (8) such that the carriageway marking (8) is located between the wheels of the axles of the vehicle (6), and
k) if the second sensor device (20) detects the actuation of the at least one actuating device that enables the driver to influence the driving dynamics of the vehicle (6) within a second definitively pre-set or variable time period starting immediately after the emission of the second warning signal the automatic intervention in the driving dynamics of the vehicle (6) is ended, but if
l) the second sensor device (20) fails to detect the actuation of the at least one actuating device that enables the driver to influence the driving dynamics of the vehicle (6) within the second pre-set or variable time period starting immediately after the emission of the second warning signal, then l1)
the vehicle (6) continues to be held automatically in the "crossed carriageway marking (8)" state by the steering actuators and/or the brake actuators and to be guided in parallel along the crossed carriageway marking such that the longitudinal centre axis (18) of the vehicle (6) is offset by less than the pre-set maximum lateral offset in relation to the carriageway marking (8) such that the carriageway marking (8) is located between the wheels of the axles of the vehicle (6), and
l2) the vehicle (6) is braked to a standstill immediately on expiry of the second pre-set or variable time period starting immediately after the emission of the second warning signal or with a time delay after it expires.

8. A driver assistance system according to claim 7, **characterised in that** the electronic control device controls or regulates the automatic intervention such that the carriageway marking (8) is located between the wheels of the axles of the vehicle (6), and the longitudinal centre line (18) of the vehicle is offset by less than the pre-set maximum lateral offset in relation to the carriageway marking (8).

9. A driver assistance system according to either of claims 7 or 8, **characterised in that** the electronic control device is designed such that is not automatically held in the "crossed carriageway marking (8)" state until the first sensor device (16) has verified whether any object is located at the roadside (10) in front of the vehicle in the direction of travel and this verification has established that this is not the case.

10. A driver assistance system according to any one of claims 7 to 9, **characterised in that** the electronic control device comprises an electronic steering controller and that there is a steering actuator controlled by the steering controller that actively acts on the steering of the vehicle (6), the lateral offset of the longitudinal centre line (18) of the vehicle (6) in relation to the carriageway marking (8) representing the control variable and being pre-set as the setpoint.

11. A method for controlling or regulating a driver assistance system according to any one of claims 1 to 6 or a driver assistance system according to any one of claims 7 to 10, **characterised in that** the first sensor device (16) contains a camera system and/or a radar system and/or a laser system and/or a GPS.

12. A method for controlling or regulating a driver assistance system according to any one of claims 1 to 6 or a driver assistance system according to any one of claims 7 to 10, **characterised in that** the at least one actuating device that enables the driver to influence the driving dynamics of the vehicle (6) contains an accelerator pedal, a brake pedal or a steering wheel of the vehicle and that the second sensor device (20) contains an electrical measurement transducer for the accelerator pedal or the electrical brake pedal or a steering angle sensor of the steering wheel of the vehicle (6).

13. A method for controlling or regulating a driver assistance system according to claim 12 or a driver assistance system according to claim 12, **characterised in that** the electronic control device is designed to detect the actuation of the accelerator pedal, the brake pedal or the steering wheel of the vehicle by comparing the measurement values of the electrical measurement transducer at different points in time, and to compare them with one another.

14. A method for controlling or regulating a driver assistance system according to any one of claims 1 to 6 or a driver assistance system according to any one of claims 7 to 10, **characterised in that** the pre-set maximum lateral offset of the longitudinal centre line (18) of the vehicle in relation to the carriageway marking (8) is less than half the axle track of the vehicle (6).

15. A vehicle having a driver assistance system (14) according to any one of claims 7 to 14 or a vehicle having a driver assistance system (14) that is controlled according to a method according to any one of claims 1 to 6.

## Revendications

1. Procédé de commande ou de régulation d'un système (14) d'aide à la conduite d'un véhicule (6), dans lequel
a) à l'aide d'un premier dispositif (16) de capteur, on détecte d'une voie (1) de circulation au moins une file (2) de circulation et un marquage (8) de voie de circulation, qui sépare la file (2) de circulation d'un bord (10) de la voie de circulation, et
b) à l'aide d'un deuxième dispositif (20) de capteur, on détecte un actionnement d'au moins un dispositif d'actionnement du véhicule (6) influençant la dynamique de déplacement du véhicule par le conducteur,
c) à l'aide d'actionneurs de direction et/ou d'actionneurs de frein, on influence la dynamique de déplacement du véhicule (6), et dans lequel
d) s'il est détecté, par le premier dispositif (16) de capteur, que le véhicule menace de quitter la file (2) de circulation, on émet un premier signal d'alerte, **caractérisé en ce que**
e) si, dans un premier laps de temps donné à l'avance de manière fixe ou variable, qui commence immédiatement après l'émission du premier signal d'alerte, il est détecté, par le deuxième dispositif (20) de capteur, un actionnement du au moins un dispositif d'actionnement influençant la dynamique de déplacement du véhicule (6) par le conducteur, il ne se produit pas une intervention automatique dans la dynamique de déplacement du véhicule par les actionneurs de direction et/ou les actionneurs de frein,
f) mais si, dans le premier laps donné à l'avance de manière fixe ou variable, qui commence immédiatement après l'émission du premier signal d'alerte, il n'est pas détecté, par le deuxième dispositif (20) de capteur, un actionnement du au moins un dispositif d'actionnement influençant la dynamique de déplacement du véhicule (6) par le conducteur, mais il est détecté, par le premier dispositif (16) de capteur, un franchissement déjà effectué du marquage (8) de la voie de circulation par au moins une roue du véhicule (6), alors
g) un deuxième signal d'alerte est émis et, comme intervention automatique dans la dynamique de déplacement du véhicule (6), maintient à l'aide des actionneurs de direction et/ou de frein le véhicule (6) automatiquement dans l'état de franchissement du marquage (8) de la voie de circulation et continue ainsi à le guider parallèlement au marquage (8) de la voie de circulation qui est franchie, de manière à ce qu'un axe (18) médian longitudinal du véhicule (6) soit décalé du marquage (8) de la voie de circulation de moins qu'un décalage latéral maximum donné à l'avance, de façon à ce que le marquage (8) de la voie de circulation soit disposé entre les roues des essieux du véhicule (6), et
h) si, dans un deuxième laps de temps donné à l'avance de manière fixe ou variable, qui commence immédiatement après l'émission du deuxième signal d'alerte, il est détecté, par le deuxième dispositif (20) de capteur, un actionnement du au moins un dispositif d'actionnement influençant la dynamique de déplacement du véhicule (6) par le conducteur, alors il est mis fin à l'intervention automatique dans la dynamique de déplacement du véhicule (6), mais si
i) dans le deuxième laps donné à l'avance de manière fixe ou variable, qui commence immédiatement après l'émission du deuxième signal d'alerte, il n'est pas détecté, par le deuxième dispositif de capteur, un actionnement du au moins un dispositif d'actionnement influençant la dynamique de déplacement du véhicule (6) par le conducteur, alors
i1) le véhicule continue à être maintenu automatiquement à l'aide des actionneurs de direction et/ou des actionneurs de frein dans l'état de franchissement du marquage (8) de la voie de circulation et continue à être guidé parallèlement au marquage de la voie de circulation qui est franchie, de manière à ce que l'axe (18) médian longitudinal du véhicule (6) soit décalé du marquage (8) de la voie de circulation de moins que le décalage latéral maximum donné à l'avance, de façon à ce que le marquage (8) de la voie de circulation soit disposé entre les roues des essieux du véhicule (6), et
i2) immédiatement après l'expiration du deuxième laps de temps donné à l'avance de manière fixe ou variable ou avec un retard dans le temps après cette expiration, le véhicule (6) est freiné automatiquement jusqu'à l'arrêt.

2. Procédé suivant la revendication 1, **caractérisé en ce que** l'on met le véhicule (6) dans l'état freiné à l'arrêt dans un mode sûr, dans lequel on effectue au moins l'une des actions suivantes : on serre un frein de stationnement, on maintient la pression de frein efficace en dernier dans un frein de service, on met en circuit un système de clignotant.

3. Procédé suivant la revendication 1 ou 2, **caractérisé en ce que** l'on maintient le véhicule (6) automatiquement dans l'état de franchissement du marquage (8) de la voie de circulation, seulement si, au moyen du premier dispositif (16) de capteur, il a été contrôlé auparavant si se trouve, dans le sens de déplacement en avant du véhicule, un objet sur le bord (10) de la voie de circulation et si ce contrôle a donné que cela n'est pas le cas.

4. Procédé suivant l'une des revendications précédentes, **caractérisé en ce qu'**il faut que soit détecté, au moyen du premier dispositif (16) de capteur, qu'un franchissement du marquage (8) de la voie de circulation a été effectué par au moins deux roues sur des essieux différents et sur un côté du véhicule, avant d'effectuer le stade g) de la revendication 1.

5. Procédé suivant l'une des revendications précédentes, **caractérisé en ce que** le décalage latéral suivant le stade g) de la revendication 1 représente une grandeur de régulation, qui est réglée à une grandeur de consigne par une régulation de direction.

6. Procédé suivant l'une des revendications précédentes, **caractérisé en ce que** l'on provoque l'intervention automatique dans la dynamique de déplacement du véhicule (6) par un système de direction auxiliaire et/ou par un système steer-by-brake.

7. Système (14) d'aide à la conduite d'un véhicule (6), comprenant
a) un premier dispositif (16) de capteur, par lequel on détecte d'une voie (1) de circulation au moins une file (2) de circulation de circulation et un marquage (8) de la voie de circulation, qui sépare la file (2) de circulation d'un bord (10) de la voie de circulation, et
b) comprenant un deuxième dispositif (20) de capteur, par lequel on détecte un actionnement d'au moins un dispositif d'actionnement du véhicule (6) influençant la dynamique de déplacement du véhicule (6) par le conducteur, et
c) comprenant un dispositif électronique de commande recevant des signaux de capteur du premier dispositif (16) de capteur et du deuxième dispositif (20) de capteur, ainsi que comprenant
d) un dispositif d'alerte commandé par le dispositif électronique de commande et émettant des signaux d'alerte, et
e) comprenant des actionneurs de direction et/ou des actionneurs de frein pouvant être commandés par le dispositif électronique de commande, par lesquels la dynamique de déplacement du véhicule (6) peut être influencée, par lequel
f) le dispositif électronique de commande est constitué de manière, lorsque le premier dispositif (16) de capteur détecte que le véhicule menace de quitter la file (2) de circulation, à commander le dispositif d'alerte pour l'émission d'un premier signal d'alerte, **caractérisé en ce que**
g) le dispositif de commande coopère avec un dispositif de mesure du temps et est constitué, en outre, de manière à ce que
h) si, dans un premier laps de temps donné à l'avance de manière fixe ou variable, qui commence immédiatement après l'émission du premier signal d'alerte, il est détecté, par le deuxième dispositif (20) de capteur, un actionnement du au moins un dispositif d'actionnement influençant la dynamique de déplacement du véhicule (6) par le conducteur, le dispositif de commande ne fasse pas débuter une intervention automatique dans la dynamique de déplacement du véhicule (6) par les actionneurs de direction et/ou les actionneurs de frein,
i) mais si, dans le premier laps donné à l'avance de manière fixe ou variable, qui commence immédiatement après l'émission du premier signal d'alerte, il n'est pas détecté, par le deuxième dispositif (20) de capteur, un actionnement du au moins un dispositif d'actionnement influençant la dynamique de déplacement du véhicule (6) par le conducteur, mais il est détecté, par le premier dispositif (16) de capteur, un franchissement déjà effectué du marquage (8) de la voie de circulation par au moins une roue du véhicule (6), alors
j) le dispositif d'alerte est commandé pour l'émission d'un deuxième signal d'alerte et maintient, comme intervention automatique dans la dynamique de déplacement du véhicule à l'aide des actionneurs de direction et/ou de frein, le véhicule automatiquement dans l'état de franchissement du marquage (8) de la voie de circulation et le conduit ainsi parallèlement au marquage (8) de la voie de circulation qui est franchie, de manière à ce qu'un axe (18) médian longitudinal du véhicule (6) soit décalé du marquage (8) de la voie de circulation de moins qu'un décalage latéral maximum donné à l'avance, de façon à ce que le marquage (8) de la voie de circulation soit disposé entre les roues des essieux du véhicule (6), et
k) si, dans un deuxième laps de temps donné à l'avance de manière fixe ou variable, qui commence immédiatement après l'émission du deuxième signal d'alerte, il est détecté, par le deuxième dispositif (20) de capteur, un actionnement du au moins un dispositif d'actionnement influençant la dynamique de déplacement du véhicule (6) par le conducteur, alors il est mis fin à l'intervention automatique dans la dynamique de déplacement du véhicule (6), mais si
l) dans le deuxième laps donné à l'avance de manière fixe ou variable, qui commence immédiatement après l'émission du deuxième signal d'alerte, il n'est pas détecté, par le deuxième dispositif de capteur, un actionnement du au moins un dispositif d'actionnement influençant la dynamique de déplacement du véhicule (6) par le conducteur, alors
l1) le véhicule continue à être maintenu automatiquement à l'aide des actionneurs de direction et/ou des actionneurs de frein dans l'état de franchissement du marquage (8) de la voie de circulation et continue à être guidé parallèlement au marquage de la voie de circulation qui est franchie, de manière à ce que l'axe (18) médian longitudinal du véhicule (6) soit décalé du marquage (8) de la voie de circulation de moins que le décalage latéral maximum donné à l'avance, de façon à ce que le marquage (8) de la voie de circulation soit disposé entre les roues des essieux du véhicule (6), et
l2) immédiatement après l'expiration du deuxième laps de temps donné à l'avance de manière fixe ou variable ou avec un retard dans le temps après cette expiration, le véhicule (6) est freiné automatiquement jusqu'à l'arrêt.

8. Système d'aide à la conduite suivant la revendication 7, **caractérisé en ce que** le dispositif électronique de commande commande ou régule l'intervention automatique, de manière à ce que le marquage (8) de la voie de circulation soit disposé entre les roues des essieux du véhicule (6) et de manière à ce que l'axe (18) médian longitudinal du véhicule soit décalé du marquage (8) de la voie de circulation de moins que le décalage latéral maximum donné à l'avance.

9. Système d'aide à la conduite suivant la revendication 7 ou 8, **caractérisé en ce que** le dispositif électronique de commande est constitué de manière à ce que le véhicule (6) soit maintenu automatiquement dans l'état de franchissement du marquage (8) de la voie de circulation, seulement lorsqu'il a été contrôle auparavant au moyen du premier dispositif (16) de capteur, si se trouve, sur le bord de la voie de circulation, un objet avant le véhicule dans le sens de déplacement et si ce contrôle a donné que ce n'est pas le cas.

10. Système d'aide à la conduite suivant l'une des revendications 7 à 9, **caractérisé en ce que** le dispositif électronique de commande comprend un régleur électronique de direction et **en ce qu'**il y a un actionneur de direction, qui est commandé par le régleur de direction et qui agit activement sur une direction du véhicule (6), dans lequel le décalage latéral de l'axe (18) médian longitudinal du véhicule (6) par rapport au marquage (8) de la voie de circulation représente la grandeur de régulation et est prescrit comme grandeur de consigne.

11. Procédé de commande ou de régulation d'un système d'aide à la conduite suivant l'une des revendications 1 à 6 ou d'un système d'aide à la conduite suivant l'une des revendications 7 à 10, **caractérisé en ce que** le premier dispositif (16) de capteur comporte un système de caméra et/ou un système radar et/ou un système laser et/ou un GPS.

12. Procédé de commande ou de régulation d'un système d'aide à la conduite suivant l'une des revendications 1 à 6 ou d'un système d'aide à la conduite suivant l'une des revendications 7 à 10, **caractérisé en ce que** le au moins un dispositif d'actionnement influençant la dynamique de déplacement du véhicule (6) par le conducteur comporte une pédale des gaz, une pédale de frein ou un volant de direction du véhicule et le deuxième dispositif (20) de capteur comporte un enregistreur de valeurs de mesure électrique de la pédale des gaz, de la pédale électrique de frein ou d'un capteur d'angle de braquage du volant du véhicule (6).

13. Procédé de commande ou de régulation d'un système d'aide à la conduite suivant la revendication 12 ou d'un système d'aide à la conduite suivant la revendication 12, **caractérisé en ce que** le dispositif électronique de commande est constitué de manière à détecter un actionnement de la pédale des gaz, de la pédale de frein ou du volant du véhicule à l'aide d'une comparaison entre les valeurs de mesure du capteur électrique de valeurs de mesure à des instants différents et à les comparer entre elles.

14. Procédé de commande ou de régulation d'un système d'aide à la conduite suivant l'une des revendications 1 à 6 ou d'un système d'aide à la conduite suivant l'une des revendications 7 à 10, **caractérisé en ce que** le décalage latéral maximum donné à l'avance de l'axe (18) médian longitudinal du véhicule par rapport au marquage (8) de la voie de circulation est plus petit que la moitié de l'écartement des roues du véhicule (6).

15. Véhicule ayant un système (14) d'aide à la conduite suivant l'une des revendications 7 à 14 ou véhicule ayant un système (14) d'aide à la conduite qui est commandé par un procédé suivant l'une des revendications 1 à 6.
